Europäisches Patentamt

European Patent Office

Office européen des brevets

(19)

(11) Veröffentlichungsnummer : **0 093 237
B1**

(12) EUROPÄISCHE PATENTSCHRIFT

(45) Veröffentlichungstag der Patentschrift :
28.05.86

(21) Anmeldenummer : 83101534.2

(22) Anmeldetag : 18.02.83

(51) Int. Cl.⁴ : **B 60 R 22/46**

(54) Aufwickelvorrichtung für Sicherheitsgurte in Fahrzeugen.

(30) Priorität : 29.04.82 DE 3215926

(43) Veröffentlichungstag der Anmeldung :
09.11.83 Patentblatt 83/45

(45) Bekanntmachung des Hinweises auf die Patenterteilung : 28.05.86 Patentblatt 86/22

(84) Benannte Vertragsstaaten :
FR GB IT SE

(56) Entgegenhaltungen :
DE-A- 2 253 657
DE-A- 2 506 678
DE-A- 3 131 637
FR-A- 2 212 798
FR-A- 2 286 730
FR-A- 2 491 340

(73) Patentinhaber : Bayern-Chemie Gesellschaft für flugchemische Antriebe mit beschränkter Haftung

D-8261 Aschau a. Inn (DE)

(72) Erfinder : Nilsson, Karl-Erik
Johann-Sebastian-Bach-Strasse 56
D-8012 Ottobrunn (DE)

(74) Vertreter : Frick, Gerhard
Harthausener Strasse 18 Ortsteil Neukeferloh
D-8011 Grasbrunn (DE)

## Beschreibung

Die Erfindung bezieht sich auf eine Aufwickelvorrichtung mit Rückstrammer für Sicherheitsgurte in Kraftfahrzeugen nach dem Oberbegriff des Patentanspruches 1.

Rückstrammer dienen dazu, eine Gurtlose beim Fahrzeugaufprall durch Zurückziehen des Gurtes zu beseitigen, damit der freie Vorfallweg bis zum Wirksamwerden des Gurtes möglichst gering ist.

Eine Aufwickelvorrichtung mit Rückstrammer hat insbesondere drei Forderungen zu erfüllen. Erstens soll der Rückstrammer eine genügend große Gurtlose (beispielsweise 20 cm) beseitigen können, zweitens soll er in dem geringen zur Verfügung stehenden Platz in Kraftfahrzeugen untergebracht werden können und drittens soll er ohne, jedenfalls nur mit minimalen Änderungen nachträglich angebracht werden können.

Eine Aufwickelvorrichtung nach dem Oberbegriff des Anspruches 1 ist bereits bekannt (FR-A-2 491 340). Um in der Aufrollerwelle genügend Energie zu speichern, ist dabei ein langer Zylinder für einen hinreichend langen Kolbenhub vorgesehen. Durch den langen Zylinder benötigt die bekannte Vorrichtung jedoch einen relativ großen Einbauraum.

Der Erfindung liegt die Aufgabe zugrunde, die bekannte Vorrichtung so zu gestalten, daß sie einfacher zu montieren ist. Dies wird durch die im Kennzeichen des Anspruchs 1 genannten Maßnahmen erreicht.

Neben seiner geringen Einbauhöhe, seiner mehrfachen Einsetzbarkeit bei den verschiedensten Aufrollautomaten der verschiedensten Hersteller (außer der Befestigung des Rückstrammers braucht lediglich in den Aufrollautomaten zusätzlich eine Kupplungsscheibe eingebaut zu werden, die im Aktivierungsfall mit der Aufrollerwelle gekuppelt wird) und seinem geringen Herstellungsaufwand weist der Rückstrammer der erfindungsgemäßen Aufwickelvorrichtung den weiteren Vorteil auf, daß er durch eine entsprechende Auslegung der Zusatzmasse an die speziellen Anforderungen des jeweiligen Fahrzeugs angepaßt werden kann, ohne die pyrotechnische Treibladung ändern zu müssen.

So wird durch eine große Zusatzmasse die Anfangsbeschleunigung des Kolbens und damit die Belastung der Bauelemente, insbesondere des Zugmittels, reduziert. Auch kann durch die Zusatzmasse den unterschiedlichen Gurtanordnungen, die sich durch verschiedene Gurtgeometrien ergeben und zu unterschiedlichen Anforderungen an den Strammungsvorgang führen können, Rechnung getragen werden.

Bei dem Zugmittel der erfindungsgemäßen Aufwickelvorrichtung kann es sich um ein Seil, eine Litze, einen Riemen, einen Draht, einen Federbandstahl oder eine Rollenkette handeln.

Nachstehend ist die Erfindung anhand der beigefügten Zeichnung beispielsweise beschrieben. Darin zeigen :

Figur 1 eine Vorderansicht einer ersten Ausführungsform der erfindungsgemäßen Aufwickelvorrichtung ;

Figur 2 eine Seitenansicht des Aufrollautomaten und im Schnitt die erste Ausführungsform des Rückstrammers, eingebaut in eine B-Säule eines Automobils ;

Figur 3 eine Ansicht entsprechend Figur 2, jedoch nach dem Zünden des Treibsatzes ;

Figur 4 eine Vorderansicht einer weiteren Ausführungsform der erfindungsgemäßen Aufwickelvorrichtung ; und

Figur 5 einen Schnitt durch eine weitere Ausführungsform des Rückstrammers.

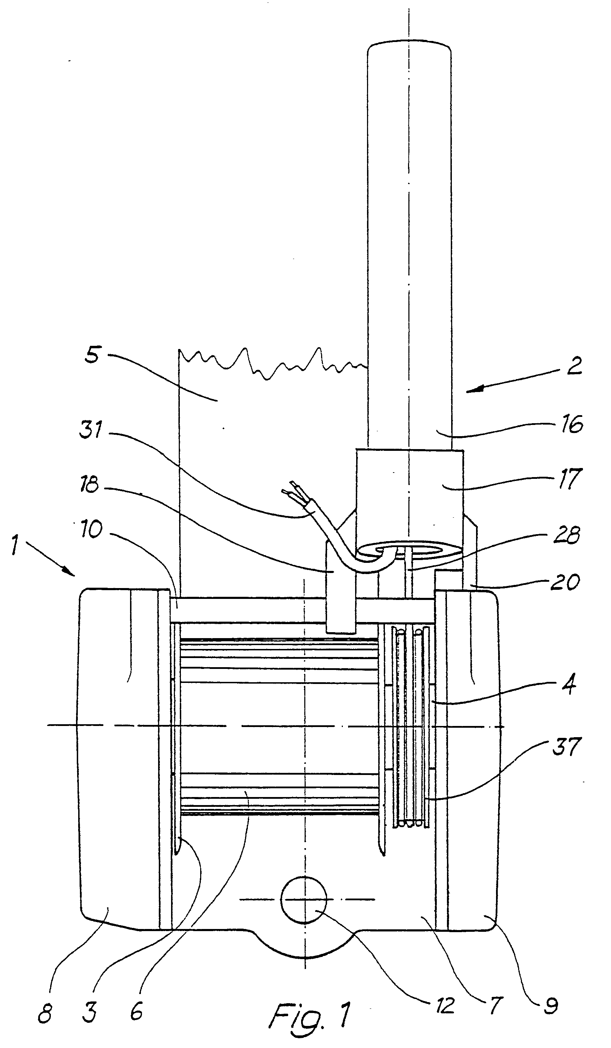

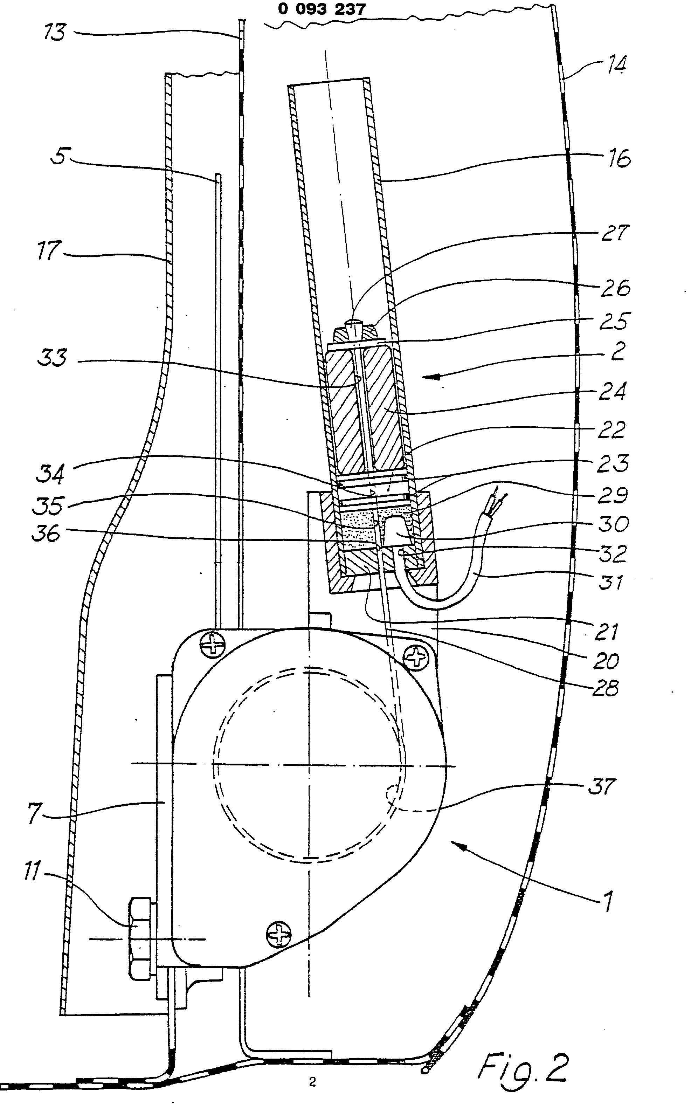

Die erfindungsgemäße Aufwickelvorrichtung besteht gemäß Figur 1 und 2 aus einem Gurtaufrollautomaten 1 mit daran angebautem Rückstrammer 2.

Bei dem Aufrollautomaten 1 handelt es sich um einen der heutzutage gängigen Typen. D. h. auf einer Gurtbandspule 3 auf einer Welle 4 ist ein Gurtband 5 zu einem Wickel 6 aufgerollt. Die Aufrollerwelle 4 ist in einem Gehäuse 7 mit plattenförmiger Rückwand drehbar gelagert. Zum Abdecken des Blockiermechanismus sowie der Aufwickelfeder des Aufrollautomaten 1 ist beiderseits der Gurtbandspule 3 eine am Gehäuse 7 befestigte Abdeckkappe 8 bzw. 9 vorgesehen. Zwischen den Abdeckkappen 8 und 9 erstreckt sich oberhalb der Gurtbandspule 3 eine am Gehäuse 7 befestigte Distanzstange 10.

Mittels einer Schraube 11, die durch eine Bohrung 12 am unteren Ende der plattenförmigen Rückwand des Gehäuses 7 geführt ist, ist der Gurtaufrollautomat 1 am Innenblech 13 der B-Säule des Automobils befestigt. Das Außenblech der B-Säule des Automobils ist in Figur 2 mit 14 bezeichnet. Das Gurtband 5 erstreckt sich vom Wickel 6 weg zunächst zwischen dem Innenblech 13 und einer Verkleidung 17 in der B-Säule.

Der Rückstrammer 2 weist gemäß Figur 1 und 2 einen Zylinder bzw. ein Zylinderrohr 16 auf. Zur Befestigung am Gurtaufrollautomaten 1 ist das Zylinderrohr 16 mit seinem unteren Ende in einen Befestigungssockel 17 eingesetzt. Der Befestigungssockel 17 weist zwei Füße 18 und 20 auf. Der axial innere Fuß 18 ist dabei an der Distanzstange 10 befestigt und der axial äußere Fuß 20 an dem Gehäuse 7. Das Zylinderrohr 16 ist um die Achse der Distanzstange 10 leicht nach hinten, d.h. zum Gurtband 5 hin, gekippt.

Das Zylinderrohr 16 weist einen konstanten Innendurchmesser auf. Es ist oben offen und unten durch einen Boden bzw. ein fest eingesetztes Bodenstück 21 geschlossen.

In dem Zylinderrohr 16 ist ein Kolben 22 verschieblich geführt, der mit zwei Dichtringen 23 gegenüber der Innenwand des Zylinderrohrs 16 abgedichtet ist und auf seiner dem offenen Ende des Zylinderrohrs 16 zugewandten Seite eine Zusatzmasse 24 aufweist, deren Funktion nachstehend noch beschrieben wird.

Auf der Zusatzmasse 24 liegt eine Scheibe 25 und ein Konusstützring 26, in dem ein Klemmstück 27 sitzt. Mit dem Klemmstück 27 ist das freie Ende z. B. eines Seiles verquetscht, das als Zugmittel 28 dient.

Zwischen dem Bodenstück 21 und dem Kolben 22 ist im Zylinderrohr 16 ein Treibsatz 29 mit einem Zünder 30 angeordnet. Ein Zündkabel 31 ist vom Zünder 30 über eine Bohrung 32 im Bodenstück 21 nach außen geführt.

Das Seil oder Kraftübertragungselement 28 erstreckt sich durch eine mittige Bohrung 33 in der Zusatzmasse 24, eine mittige Paßbohrung 34 in dem Kolben 22, eine mittige Bohrung 35 in dem Treibsatz 29 und dann durch eine mittige Paßbohrung 36 im Bodenstück 21 hindurch nach außen zu einer Kupplungsscheibe 37.

Wie aus Figur 1 ersichtlich, ist das Seil 28 dreimal um die Kupplungsscheibe 37 gewickelt. Zwischen der Kupplungsscheibe 37 und der Welle 4 des Aufrollautomaten 1 ist eine Mitnehmerkupplung vorgesehen, die bewirkt, daß beim Abzug des Seiles 28 von der Kupplungsscheibe 37, also nach dem Zünden des Treibsatzes 29, die Kupplungsscheibe 37 mit der Welle 4 des Aufrollautomaten 1 gekuppelt wird. Es kann praktisch jede beliebige bekannte Mitnehmerkupplung zum Einsatz kommen, so daß es sich erübrigt, deren Aufbau im einzelnen zu beschreiben.

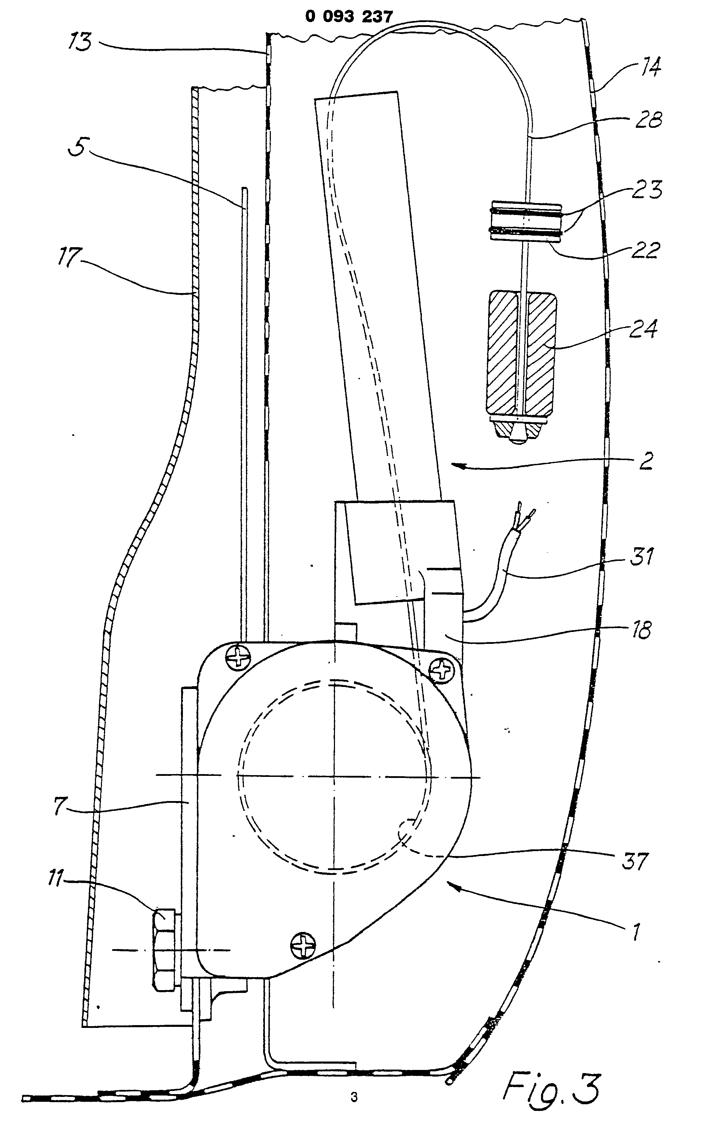

Wie aus Figur 3 ersichtlich, wird nach dem Zünden des Treibsatzes 29 der Kolben 22 samt Zusatzmasse 24 aus dem Zylinderrohr 16 herausgeschleudert, d. h. Kolben 22 und Zusatzmasse 24 legen im Aktivierungsfall einen Weg zurück, der größer ist als die Länge des Zylinderrohres 16. Dieser Weg soll mindestens so groß sein, daß sämtliche drei Wicklungen des Seiles 28 von der Kupplungsscheibe 37 abgewickelt werden, was sich beispielsweise durch eine entsprechende Länge des Zylinderrohres 16 bzw. durch eine entsprechende Auslegung der Zusatzmasse 24 erreichen läßt.

Die Funktion der erfindungsgemäßen Aufwickelvorrichtung sei anhand der Ausführungsform nach Figur 1 bis 3 nunmehr näher erläutert.

Bei einem Unfall identifiziert ein nicht dargestellter Sensor die Unfallschwere und gibt bei Überschreitung einer festgelegten Schwelle einen Zündimpuls über das Zündkabel 31 an den Zünder 30. Der Treibsatz 29 brennt ab und die Treibgase dehnen sich impulsartig aus. Der Kolben 22 mit der vorgelagerten Zusatzmasse 24 wird im Zylinderrohr 16 beschleunigt. Mit Kolben 22 wird auch das Seil 28 bewegt, was sich in einer Drehung der Kupplungsscheibe 37 der Mitnehmerkupplung bemerkbar macht. Nach wenigen Graden der Drehung der Kupplungsscheibe 37 wird die Welle 4 durch die Mitnehmerkupplung gekuppelt und mitgenommen. Die Mitnehmerkupplung stellt damit zwischen dem im Zylinderrohr 16 nach oben schießenden Kolben 22 und dem einzuziehenden Gurtband 5 eine durchgehende Verbindung her. Wenn der Kolben 22 die Oberkante des Zylinders 16 verläßt, ist der Antrieb aus der Expansion des Treibgases abgeschlossen.

Im Fall einer sehr großen Gurtlose reicht unter Umständen der bis jetzt zurückgelegte Weg des Kolbens 22, der etwa der Zylinderrohrlänge entspricht, jedoch noch nicht aus. Jetzt setzt die Wirkung der Zusatzmasse 24 ein, die einen großen Inhalt an kinetischer Energie auf der Beschleunigungsstrecke im Zylinderrohr 16 aufgenommen hat. Sie wirkt nunmehr als Schwungmasse und schießt weiter nach oben, so daß der Gurtbandeinzugsvorgang (Strammungsvorgang) fortgesetzt wird.

Wenn die ansteigende Kraft am Gurtband 5 und die Kraft aus dem Energieinhalt der in Bewegung befindlichen Massen (auch Drehenergie der Welle 4 des Aufrollautomaten 1 und der Kupplungsscheibe 37 der Mitnehmerkupplung) im Gleichgewicht sind, ist der Strammungsvorgang beendet.

Ein nunmehr mögliches Herausziehen des Gurtbandes 5 in Kraftrichtung wird durch die normale Blockierung des Aufrollautomaten 1 verhindert, die auch die jetzt einsetzende Crash-Last aus der Vorverlagerung der Insassen aufzunehmen hat.

Der Rückstrammer 2 wird sinnvollerweise im Fahrzeug so angeordnet, daß er sich in einem geschützten (gekapselten Raum) befindet. Denn einerseits wirkt die Zusatzmasse 24 wie ein Geschoß und andererseits können die austretenden Treibgase das Gurtband 5 beschädigen. In der in Figur 1 bis 3 dargestellten Ausführungsform wirkt das Innenblech 13 der B-Säule als Schutzblech.

Es ist ersichtlich, daß bei der erfindungsgemäßen Aufwickelvorrichtung die Länge des Zylinderrohrs 16 gering gehalten werden kann. Auch erstreckt sich der Rückstrammer 2 in die Höhe, wo in der B-Säule des Automobils normalerweise noch am meisten Platz vorhanden ist. Die Änderungen des Aufrollautomaten sind auf den Einbau der Kupplungsscheibe 37 der Mitnehmerkupplung beschränkt. Demgemäß wird die Aufwickelvorrichtung in axialer Richtung lediglich um die Breite der Kupplungsscheibe 37 vergrößert. Die Zusatzmasse 24 besteht vorteilhafterweise aus einem schweren Metall, beispielsweise aus Blei. Der Kolben 22 und die Zusatzmasse 24 können auch aus einem Stück gebildet sein.

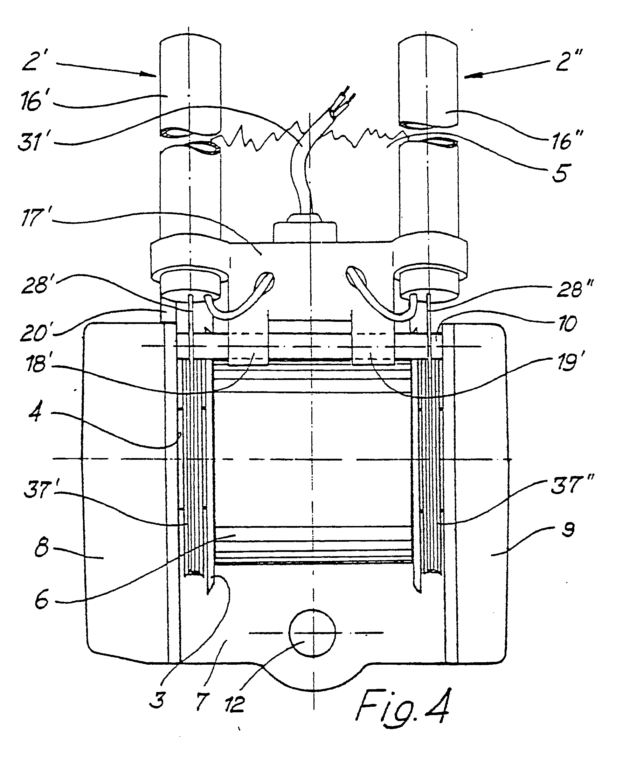

Die in Figur 4 dargestellte Ausführungsform der erfindungsgemäßen Aufwickelvorrichtung unterscheidet sich von derjenigen nach Figur 1 bis 3 im wesentlichen dadurch, daß zwei Rückstrammer 2' und 2" vorgesehen sind, deren Kraftübertragungselemente 28' bzw. 28" auf je einer Kupplungsscheibe 37' bzw. 37" einer Mitnehmerkupplung aufgewickelt sind. Die beiden Kupplungsscheiben 37' und 37" sind beiderseits der Gurtbandspule 3 auf der Welle 4 des Aufrollautomaten 1 angebracht. Die Zylinderrohre 16' und 16" sind in einem Befestigungssockel 17' eingesetzt, der drei Füße 18', 19' und 20' aufweist, wobei die beiden dem Gurtband 5 abgewandten Füße 18' und 19' auf der Distanzstange 10 und der dem Gurtband 5 zugewandte Fuß 20' oberhalb der Achse der Aufrollerwelle 4 sich auf dem Gehäuse 7 des Aufrollautomaten 1 abstützt. Das Zündkabel 31' weist je eine Abzweigung zu den Zündern der beiden Rückstrammer 2' und 2'' auf.

Die Ausführungsform gemäß Figur 4 mit den beiden symmetrisch angeordneten Rückstrammern 2' und 2'' ist insbesondere dann von Vorteil, wenn größere Gurtbandeinzugskräfte über die aus Flexibilitätsgründen relativ dünn zu haltenden Kraftübertragungselemente zur Anwendung kommen. Die Zusatzmasse kann bei diesem Ausführungsbeispiel ausschließlich durch die beiden Kolben der Rückstrammer 2' und 2'' gebildet sein.

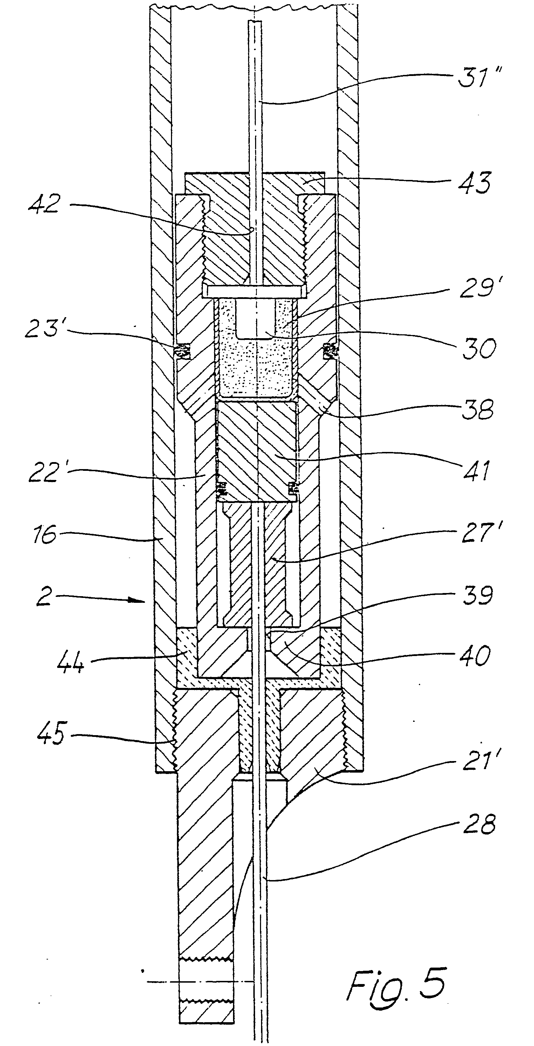

Die in Figur 5 dargestellte Ausführungsform des Rückstrammers unterscheidet sich von derjenigen nach Figur 1 bis 3 im wesentlichen dadurch, daß der Treibsatz 29' im Kolben 22' angeordnet ist. Dadurch bildet der Treibsatz 29' zumindest einen Teil der Zusatzmasse.

Weiterhin sind bei der Ausführungsform nach Figur 5 zwischen dem Treibsatz 29' und der dem Bodenstück 21' zugewandten Seite des Kolbens 22' Austrittsbohrungen 38 im Kolben 22' vorgesehen. Das Klemmstück 27', das an dem freien Ende des Seiles oder Kraftübertragungselements 28 befestigt ist, wird von dem Boden 40 des innen hohlen Kolbens 22 gehalten, wobei sich das Seil 28 durch eine mittige Bohrung 39 im Kolbenboden 40 erstreckt. Eine Scheibe 41, die als Zusatzmasse ausgebildet sein kann, schließt den Treibsatz 29 gegenüber dem Seil 28 ab. Das Zündkabel 31'' ist durch eine Bohrung 42 in einer am Kolben 22' auf dessen dem offenen Ende des Zylinderrohres 16 zugewandten Seite befestigten Verschlußstopfen 43 geführt. Es tritt aus dem Zylinderrohr 16 über dessen obere, freie Öffnung aus.

Weiterhin ist am Bodenstück oder Zylinderboden 21' eine Dichtung 44 angeordnet, die die Bohrung für das Zugmittel 28 im Zylinderboden 21' nach außen abdichtet. Zugleich dichtet die Dichtung 44 ein zwischen dem Zylinderboden 21' und dem Zylinder 16 vorgesehenes Gewinde 45 ab. Auch wird durch die Dichtung 44 der Kolben 22' in seiner Ausgangslage gehalten. Schließlich dient die Dichtung 44 als Wirkfläche für die Treibgase zu Beginn des Kolbenhubes.

Das Zugmittel 28, 28', 28'' ist vorzugsweise mit einer Kunststoffschicht versehen, die abschmilzt, wenn der Treibsatz 29, 29' abbrennt, und dadurch das Zugmittel 28, 28', 28'' bzw. dessen Seele im Sinne einer ablativen Schicht vor zu großer Erwärmung schützt.

**Patentansprüche**

1. Aufwickelvorrichtung mit Rückstrammer (2, 2', 2'') und Gurtaufrollautomaten (1) für Sicherheitsgurte in Fahrzeugen, die einen mit einem von den Treibgasen eines pyrotechnischen Treibsatzes (29, 29') beaufschlagbaren Kolben (22, 22') versehen einseitig offenen mit dem Gurtaufrollautomaten fest verbundenen Zylinder (16, 16', 16'') sowie ein Zugmittel (28, 28', 28'') aufweist, das mit einem Ende mit dem Kolben fest verbunden ist, durch den Zylinderboden geführt und mit dem anderen Ende um eine Scheibe (37, 37', 37'') einer Mitnehmerkupplung gewickelt ist, die nach dem Zünden des Treibsatzes die Scheibe, um die das Zugmittel gewickelt ist, mit der Aufrollerwelle (4) des Gurtaufrollautomaten kuppelt, dadurch gekennzeichnet, daß der Treibsatz (29, 29') innerhalb des Zylinders (16, 16', 16'') des Rückstrammers (2, 2', 2'') angeordnet ist, daß dem Kolben (22, 22') des Rückstrammers (2) eine Zusatzmasse (24, 41) zugeordnet ist und daß der Kolben (22, 22') mit der Zusatzmasse (24, 41) nur in der Anfangsphase des Spannvorganges in dem Zylinder (16, 16', 16'') geführt ist.

2. Aufwickelvorrichtung nach Anspruch 1, dadurch gekennzeichnet, daß der Treibsatz (29) im Zylinder (16) am Zylinderboden (21) angeordnet ist.

3. Aufwickelvorrichtung nach Anspruch 1 oder 2, dadurch gekennzeichnet, daß der Treibsatz (29') im Kolben (22') angeordnet ist, und zumindest teilweise die Zusatzmasse bildet.

4. Aufwickelvorrichtung nach Anspruch 3, dadurch gekennzeichnet, daß der Kolben (22') zwischen dem Treibsatz (29') und seiner dem Zylinderboden (21') zugewandten Stirnseite Austrittsbohrungen (38) für die Treibgase aufweist.

5. Aufwickelvorrichtung nach Anspruch 3 oder 4, dadurch gekennzeichnet, daß das Zündkabel (31') zur Zündung des Treibsatzes (29') über das offene Ende in den Zylinder (16) eintritt.

6. Aufwickelvorrichtung nach einem der vorstehenden Ansprüche, dadurch gekennzeichnet, daß zwei Rückstrammer (2', 2'') vorgesehen sind, deren Zugmittel (28', 28'') mit zwei beiderseits der Gurtbandspule (3) angeordneten Mitnehmerkupplungsscheiben (37', 37'') zusammenwirken.

7. Aufwickelvorrichtung nach einem der vorstehenden Ansprüche mit einem Gurtaufrollautomaten, der eine oberhalb der Gurtbandspule verlaufende Distanzstange (10) aufweist, dadurch gekennzeichnet, daß der bzw. die Zylinder (16 bzw. 16', 16'') des bzw. der Rückstrammer (2 bzw. 2', 2'') an der Distanzstange (10) befestigt sind.

8. Aufwickelvorrichtung nach einem der vorstehenden Ansprüche, dadurch gekennzeichnet, daß das Zugmittel (28, 28', 28'') mit Kunststoff beschichtet ist.

9. Aufwickelvorrichtung nach einem der Ansprüche 3 bis 5, dadurch gekennzeichnet, daß am Zylinderboden (21') eine Dichtung (44) vorgesehen ist, die die Bohrung für das Zugmittel (28) im Zylinderboden (21') nach außen und ein zwischen Zylinder (16) und Zylinderboden (21') vorgesehenes Gewinde (45) abdichtet und den Kolben (22') in der Ausgangslage hält.

10. Aufwickelvorrichtung nach Anspruch 12, dadurch gekennzeichnet, daß die Dichtung (44) die Wirkfläche für die Treibgase zu Beginn des Kolbenhubes bildet.

**Claims**

1. A winding device having a recoil-tightener (2, 2', 2") and automatic belt reeling device (1) for safety belts in vehicles, with a cylinder (16, 16', 16") open at one end and rigidly connected to the belt reeling device and provided with a piston (22, 22') that can be subject to propellant gases from a pyrotechnic propellant composition (29, 29') and which further has a traction means (28, 28', 28") which is rigidly connected to the piston by one end and which passes through the base of the cylinder and which is wound at the other end about a disc (37, 37', 37") of an engaging coupling by which, after the ignition of the propellant composition, the disc around which the traction means is wound is coupled to the reeling shaft (4) of the automatic belt reeling device, characterized by the fact that the propellant composition (29, 29') is positioned inside the cylinder (16, 16', 16") of the recoil-tightener (2, 2', 2"), and that an additional mass (24, 41) is associated with the piston (22, 22') of the recoil-tightener (2) and that the piston (22, 22') with the additional mass (24, 41) is only guided in the cylinder (16, 16', 16") during the initial phase of the tensioning process.

2. A winding device in accordance with Claim 1, characterized by the fact that the propellant composition (29) in the cylinder (16) is positioned on the base (21) of the cylinder.

3. A winding device in accordance with Claim 1 or 2, characterized by the fact that the propellant composition (29') is situated in the piston (22') and at least partly forms the additional body.

4. A winding device in accordance with Claim 3, characterized by the fact that the piston (22') is provided, between the propellant composition (29') and the end facing the base (21') of the cylinder, with outlet bores (38) for the propellant gases.

5. A winding device in accordance with Claim 3 or 4, characterized by the fact that the ignition cable (32') for the ignition of the propellant composition (29') enters the cylinder (16) through the open end.

6. A winding device in accordance with any one of the preceding claims, characterized by the fact that the two recoil-tighteners (2, 2") are provided of which the traction means (28', 28") interact with two engaging coupling discs (37', 37") situated on the two sides of the belt reel (3).

7. A winding device in accordance with any one of the preceding claims, with an automatic belt reeling device having a spacing bar (10) extending above the belt reel, characterized by the fact that the cylinder or cylinders (16, or 16', 16") of the recoil-tighteners (2, or 2', 2") are secured to the spacing bar (10).

8. A winding device in accordance with any one of the preceding claims, characterized by the fact that the traction means (28, 28', 28") is coated with a plastic.

9. A winding device in accordance with any one of Claims 3 to 5, characterized by the fact that a seal (44) is provided on the base (21') of the cylinder and seals the bore for the traction means (28') in the cylinder base (21) from the outside, a screw threading (45) being provided between the cylinder (16) and the cylinder floor (21') holding the piston (22') in the initial position.

10. A winding device in accordance with Claim 12, characterized by the fact that the seal (44) forms the surface on which the propellant gases act at the beginning of the piston stroke.

**Revendications**

1. Dispositif d'enroulement avec rattrapeur de raidissement (2, 2', 2") et envideur automatique de sangle (1) pour ceintures de sécurité dans des véhicules muni premièrement d'un cylindre (16, 16', 16") ouvert d'un côté, relié rigidement à l'envideur automatique et renfermant un piston (22, 22') actionnable par les gaz propulseurs d'une composition pyrotechnique fusante (29, 29'), deuxièmement d'un moyen de traction (28, 28', 28") relié rigidement par une extrémité au piston, guidé à travers le fond du cylindre et enroulé par l'autre extrémité autour d'une poulie (37, 37', 37") d'un accouplement à entraînement qui, après l'allumage de la composition fusante, couple la poulie autour de laquelle est enroulé ledit moyen de traction avec l'arbre (4) de l'envideur automatique de sangle, dispositif d'enroulement caractérisé par le fait que la composition fusante (29, 29') est placée à l'intérieur du cylindre (16, 16', 16") du rattrapeur de raidissement (2, 2', 2"), qu'une masse additionnelle (24, 41) est associée au piston (22, 22') dudit rattrapeur de raidissement (2) et que piston (22, 22') et masse additionnelle (24, 41) ne sont guidés dans le cylindre (16, 16', 16") que dans la phase initiale du processus de mise en tension.

2. Dispositif d'enroulement selon la revendication 1 caractérisé par le fait que la composition fusante (29) est placée, dans le cylindre (16), sur le fond (21) dudit cylindre.

3. Dispositif d'enroulement selon la revendication 2 caractérisé par le fait que la composition fusante (29') est placée dans le piston (22') et forme au moins en partie la masse additionnelle.

4. Dispositif d'enroulement selon la revendication 3 caractérisé par le fait que le piston (22') présente, entre sa face frontale tournée vers le fond (21') du cylindre et la composition fusante (29'), des perçages de sortie (38) pour les gaz propulseurs.

5. Dispositif d'enroulement selon la revendication 3 ou 4 caractérisé par le fait que le câble d'allumage (31') destiné à allumer la composition fusante (29') entre dans le cylindre (16) par l'extrémité ouverte de ce dernier.

6. Dispositif d'enroulement selon l'une des revendications précédentes caractérisé par le fait qu'il comporte deux rattrapeurs de raidissement (2', 2") dont les moyens de traction (28', 28") coopèrent avec deux poulies d'accouplement à entraînement (37', 37") placées de part et d'autre du rouleau de sangle (3).

7. Dispositif d'enroulement selon l'une des revendications précédentes, avec un envideur automatique de sangle qui comporte une barre d'entretoisement (10) s'étendant au-dessus du rouleau de sangle, caractérisé par le fait que le ou les cylindres (16 ou 16', 16") du ou des rattrapeurs de raidissement (2 ou 2', 2") sont fixés à ladite barre d'entretoisement (10).

8. Dispositif d'enroulement selon l'une des revendications précédentes caractérisé par le fait que le moyen de traction (28, 28', 28") est revêtu de matière plastique.

9. Dispositif d'enroulement selon l'une des revendications 3 à 5 caractérisé par le fait qu'il est prévu, pour le fond (21') du cylindre, un joint (44) qui étanchifie le perçage pour le moyen de traction (28) dans ledit fond (21') du cylindre vers l'extérieur ainsi qu'un filetage (45) ménagé entre le cylindre (16) et son fond (21') et qui maintient le piston (22') à sa position de départ.

10. Dispositif d'enroulement selon la revendication 12 caractérisé par le fait que le joint (44) forme la surface active pour les gaz propulseurs au début de la course du piston.

*Fig. 1*

0 093 237

Fig. 2

0 093 237

Fig.3

Fig.4

Fig. 5